# EUROPÄISCHE PATENTSCHRIFT

(11) **EP 3 799 997 B1**
(45) Veröffentlichungstag und Bekanntmachung des Hinweises auf die Patenterteilung: **07.06.2023**
(21) Anmeldenummer: 20196080.4
(22) Anmeldetag: 14.09.2020
(51) Int. Cl.: B23K 26/03, B23K 26/046, G02B 7/32

(54) **DETEKTIONSANORDNUNG, AUTOFOKUSVORRICHTUNG UND FOKUSSIERVERFAHREN**
DETECTION ASSEMBLY, AUTOFOCUS DEVICE AND FOCUSING METHOD
AGENCEMENT DE DÉTECTION, DISPOSITIF DE MISE AU POINT AUTOMATIQUE ET PROCÉDÉ DE MISE AU POINT

(30) Priorität: 13.09.2019 DE 102019124671
(43) Veröffentlichungstag der Anmeldung: 07.04.2021
(73) Patentinhaber: Ofer, Vladislav, 64283 Darmstadt (DE)
(72) Erfinder: Ofer, Vladislav, 64283 Darmstadt (DE)
(74) Vertreter: Habermann Intellectual Property Partnerschaft von Patentanwälten mbB

(56) Entgegenhaltungen:
- DE-A1-102010 015 682
- JP-A- H09 168 882
- JP-A- 2005 088 072
- US-A1- 2005 252 895

## Beschreibung

Die Erfindung betrifft eine Detektionsanordnung zum Überwachen einer Fokussierung eines mittels einer Fokussieroptik auf einer Oberfläche gebündelten Bearbeitungslaserstrahls entsprechend dem Oberbegriff des Anspruchs 1 (siehe z.B. JP H09 168882 A).

Hochenergetische Bearbeitungslaserstrahlen werden in den verschiedensten Anwendungen verwendet, beispielsweise zum Zerschneiden, zum Bearbeiten oder zum Verschweißen von Werkstücken aus Metall oder Kunststoff. Eine besondere Herausforderung ist dabei die Fokussierung des Bearbeitungslaserstrahls auf der zu bearbeitenden Oberfläche. Hierzu werden üblicherweise Fokussieroptiken verwendet, die einen in sie eintretenden Bearbeitungslaserstrahl, den sogenannten Primärstrahl, in einen aus ihnen austretenden Bearbeitungslaserstrahl, den sogenannten Sekundärstrahl, transformieren. Jeder dieser beiden Bearbeitungslaserstrahlen weist entlang einer gemeinsamen Strahlrichtung eine Strahltaille auf, an deren Position eine Leistungsdichte des jeweiligen Bearbeitungslaserstrahls maximal ist. Die Strahltaille des Sekundärstrahls weist einen geringeren Strahldurchmesser auf, als die Strahltaille des Primärstrahls. Die Leistungsdichte des Sekundärstrahls in seiner Strahltaille ist also größer, als die Leistungsdichte des Primärstrahls in seiner Strahltaille. Bei der Anwendung hochenergetischer Bearbeitungslaserstrahlen ist es daher üblicherweise das Ziel, eine zu bearbeitende Oberfläche und die Strahltaille des Sekundärstrahls in Deckung miteinander zu bringen.

Anders als "normales" Licht, ist die Ausbreitung von Laserlicht stark von den Prinzipien der Wellenoptik geprägt. Die Prinzipien der "klassischen" Strahloptik sind daher nur auf Teilaspekte der Ausbreitung von Laserlicht anwendbar. In Bezug auf die Fokussierung von Bearbeitungslaserstrahlen bedeutet das insbesondere, dass ein optischer Brennpunkt einer Linse nicht demjenigen Ort entspricht, an dem der oben beschriebene Sekundärstrahl seine Strahltaille aufweist. Nachfolgen meint der Begriff "Brennpunkt" stets denjenigen Ort, an dem ein durch Transformation eines Primärstrahls gebildeter Sekundärstrahl seine Strahltaille aufweist. Weiterhin wird nachfolgend auf die Unterscheidung zwischen Primärstrahl und Sekundärstrahl verzichtet.

Aus den geschilderten Besonderheiten von Laserlicht ergeben sich auch in der Praxis eine Vielzahl von Problemen, insbesondere bei der Fokussierung eines Bearbeitungslaserstrahls auf einer Oberfläche. Bei vielen der aus dem Stand der Technik bekannten Verfahren zur Fokussierung eines Bearbeitungslaserstrahls, werden Prinzipien der klassischen Optik adaptiert, wobei in Kauf genommen wird, dass es aufgrund der physikalischen Besonderheiten des Laserlichts zu Leistungsverlusten, in Folge einer unzureichenden Fokussierung des Laserlichts kommt.

So ist beispielsweise bekannt, mittels optischer Verfahren, die denen ähneln, die auch im Bereich der Fotografie und der Mikroskopie zur Anwendung kommen, zu überprüfen, ob die zu bearbeitende Oberfläche im Fokuspunkt der Fokussierlinse liegt. Derartige Verfahren zur Fokussierung nach klassischen optischen Prinzipien sind beispielsweise aus der DE 10 2017 115 021 A1 und der US 5 136 149 A bekannt. Aufgrund der Ablage zwischen dem Fokuspunkt der Fokussierlinse und dem Brennpunkt, in dem das Laserlicht maximal gebündelt ist, kann mittels derartiger Verfahren nur eine unzureichende Fokussierung des Laserlichts erreicht werden.

Bei der Anwendung hochenergetischer Bearbeitungslaserstrahlen, insbesondere beim Laserschneiden, wird die zu bearbeitende Oberfläche bei den aus dem Stand der Technik bekannten Verfahren üblicherweise in einem festen Abstand zu der Fokussieroptik geführt, bzw. die Fokussieroptik wird in einem festen Abstand zu der Oberfläche geführt. Hierzu sind beispielsweise Vorrichtungen und Verfahren bekannt, die einen Entfernungsmesser und/ oder seine Verwendung umfassen. Bei der Bearbeitung rauer, gewölbter, strukturierte oder ähnlicher Oberflächen, ist es mittels derartiger Verfahren nicht möglich, den Bearbeitungslaserstrahl und die Oberfläche so aneinander anzupassen, dass ein sauberes Bearbeitungsbild entsteht. Derartige Verfahren und Vorrichtungen sind beispielsweise in der US 4 074 104 A, der JP H03-291 186 A und der EP 0 091 400 A1 beschrieben.

Weitere bekannte Fokusverfahren und -vorrichtungen nutzen die Kohärenz des Laserlichts aus, um Interferenzmuster zu generieren, deren Aussehen mit der Fokussierung des Bearbeitungslaserstrahls korreliert. Hierbei ist insbesondere nachteilig, dass zum Fokussieren qualitativ sehr hochwertige Interferenzmuster generiert werden müssen, was nur bei sehr glatten Oberflächen möglich ist. Verunreinigungen auf der Oberfläche, beispielsweise durch Asche, Schlacke, Staub oder Zunder, machen die Anwendung derartiger Verfahren unmöglich.

Üblicherweise sind derartige Verfahren lediglich bei Oberflächenrauigkeiten anwendbar, die kleiner sind als 10 Mikrometer.

Als Aufgabe der vorliegenden Erfindung wird es daher angesehen, eine einfach zu realisierende Detektionsanordnung zur Verfügung zu stellen, mit der die Fokussierung eines Bearbeitungslaserstrahls kontinuierlich, während des Betriebs des Bearbeitungslaserstrahls überwachbar ist und die unabhängig von einer Oberflächenbeschaffenheit der zu bearbeitenden Oberfläche anwendbar ist.

Eine Detektionsanordnung zum Überwachen einer Fokussierung eines mittels einer Fokussieroptik auf einer Oberfläche gebündelten Bearbeitungslaserstrahls entsprechend der Erfindung ist im Anspruch 1 definiert. Eine Autofokusvorrichtung mit einer solchen Detektionsanordnung entsprechend der Erfindung ist im Anspruch 6 definiert. Und ein Fokussierverfahren zum Fokussieren eines Bearbeitungslaserstrahl unter Verwendung einer solchen Detektionsanordnung ist im Anspruch 14 definiert.

Weitere Ausführungsbeispiele dieser Erfindung sind in den abhängigen Ansprüche definiert.

Der der Erfindung entsprechende plane Spiegel der Detektionsanordnung kann insbesondereals ein Prisma oder Ähnliches ausgebildet sein. Der plane Spiegel kann insbesondere eine metallbedampfte Oberfläche umfassen, die durch einem Spiegelträger gehalten ist. Er kann auch zumindest abschnittsweise aus einem Metall- oder Kristallblock hergestellt sein. Grundsätzlich sind alle planen Spiegel, die zum Umlenken von Bearbeitungslaserstrahlen verwendet werden können, auch dazu geeignet mit der erfindungsgemäßen Detektionsanordnung verwendet zu werden.

Besonders bevorzugt ist die Fokussierlinse als eine positive Linse ausgebildet, wobei die Fokussierlinse insbesondere als eine bi-konvexe, eine plan-konvexe oder eine konkav-konvexe Linse ausgebildet sein kann. Bei einer als konkav-konvexe Linse ausgebildeten Fokussierlinse ist es erfindungsgemäß vorgesehen, dass eine konkave und eine konvexe optisch aktive Fläche der Linse so aneinander angepasst sind, dass die konkav-konvexe Linse Sammeleigenschaften aufweist.

Eine vorteilhafte Umsetzung des Erfindungsgedankens sieht vor, dass die Detektionsanordnung einen Pilotlaser aufweist und/ oder mit einem Pilotlaser in Wirkverbindung bringbar ist, wobei ein Pilotlaserstrahl des Pilotlasers in einem Pilotauftreffbereich innerhalb des Beleuchtungsabschnitts auf die Oberfläche trifft, wobei der Streulichtstrahl, der durch den Spiegel umgelenkt wird, aus dem Pilotlaserstrahl hervorgeht und wobei der Pilotlaser, der Bearbeitungslaserstrahl und die Detektionsanordnung derart aneinander angepasst und zueinander ausgerichtet sind, dass mittels des auf das Sensorelement umgelenkten Streulichtstrahls des Pilotlaserstrahls eine Fokussierung des Bearbeitungslaserstrahls überprüfbar ist.

Besonders bevorzugt ist der Pilotauftreffbereich des Pilotlasers von dem Auftreffbereich des Bearbeitungslasers beabstandet. Dabei ist vorgesehen, dass ein zwischen dem Pilotauftreffbereich und dem Auftreffbereich ausgebildeter Auftreffabstand im Verhältnis zu einer Größe des Auftreffbereichs klein ist. Hierdurch wird es ermöglicht, dass die Fokussierung des Bearbeitungslaserstrahls nicht durch Störungen der Oberfläche beeinflusst wird, die durch den Bearbeitungslaserstrahl in dem Auftreffbereich verursacht werden. Es ist vorteilhafterweise vorgesehen, dass der Auftreffabstand kleiner als 2 mm, bevorzugt ist kleiner als 1 mm und besonders bevorzugt kleiner als 0,5 mm ist.

Es ist vorgesehen, dass der Pilotlaserstrahl eine Leistung aufweist, die deutlich kleiner ist als die des Bearbeitungslaserstrahls. Üblicherweise liegt die Leistung von Bearbeitungslaserstrahlen für die Oberflächenbearbeitung im Bereich von mehreren hundert bis mehreren tausend Watt. Dementsprechend ist es erfindungsgemäß vorgesehen, dass der Pilotlaser eine Leistung von höchstens 10 Watt, bevorzugt von höchstens 5 Watt und besonders bevorzugt von höchstens einem Watt aufweist. Die Verwendung eines derartigen Pilotlasers ist besonders vorteilhaft, da optische Komponenten, die für eine Strahlführung des Pilotlaserstrahls verwendet werden, weniger widerstandsfähig ausgelegt sein müssen, als diejenigen, die zur Strahlführung des Bearbeitungslaserstrahls verwendet werden. So ist es ab einer bestimmten Leistungsdichte von Bearbeitungslaserstrahlen beispielsweise erforderlich, dass insbesondere Spiegel gekühlt werden müssen.

Um eine Detektierbarkeit des Pilotlaserstrahls mittels des Sensorelements zu verbessern, ist es vorteilhafterweise vorgesehen, dass eine Wellenlänge des Pilotlaserstrahls von einer Wellenlänge des Bearbeitungslaserstrahls verschieden sein kann. Besonders bevorzugt weist das Sensorelement hierbei eine erhöhte Empfindlichkeit für Laserlicht mit der Wellenlänge des Pilotlaserstrahls auf.

Es ist darüber hinaus auch möglich und erfindungsgemäß vorgesehen, dass die Detektionsanordnung mehrere Pilotlaser aufweisen kann, deren Pilotlaserstrahlen in unterschiedlichen Pilotauftreffpunkten auf die Oberfläche treffen. Dabei ist es vorgesehen, dass aus den Pilotlaserstrahlen voneinander unabhängige Streulichtstrahlen hervorgehen, die durch zumindest einen Spiegel auf zumindest ein Sensorelement umgelenkt werden. Bevorzugt weist eine derartige Detektionsanordnung für jeden unabhängigen Streulichtstrahl jeweils ein Sensorelement auf. Durch eine derartige Ausgestaltung der erfindungsgemäßen Detektionsanordnung ist es insbesondere ermöglicht, dass auch unerwünschte Winkelablagen zwischen der Oberfläche und dem Bearbeitungslaserstrahl detektierbar sind.

Eine vorteilhafte Ausgestaltung der Erfindung sieht vor, dass die Detektionsanordnung ein Objektiv aufweist, wobei mittels des Objektivs der von dem Spiegel umgelenkte Streulichtstrahl auf dem Sensorelement fokussierbar ist, wobei mittels des Objektivs eine außeraxiale Abbildung eines Pilotauftreffbereichs des Pilotlaserstrahls und/ oder des Auftreffbereichs des Bearbeitungslaserstrahls in dem Beleuchtungsabschnitts auf das Sensorelement projizierbar ist. Besonders bevorzugt ist der Beleuchtungsabschnitt streifenförmig ausgebildet.

Durch eine derartige Ausgestaltung der erfindungsgemäßen Detektionsanordnung ist die Überprüfung der Fokussierung erleichtert, da kein zweidimensionales Bild analysiert werden muss, wie es beispielsweise bei den aus dem Stand der Technik bekannt Verfahren, die auf Interferometrie basierenden, der Fall ist. Um zu bestimmen, ob die Fokussierung des Bearbeitungslasers korrekt ist, ist es bei der erfindungsgemäßen Detektionsanordnung ausreichend, zu bestimmen, an welcher Position des Beleuchtungsabschnitts die außeraxiale Abbildung liegt. Die außeraxiale Abbildung ist besonders bevorzugt ein punktförmiger Lichtfleck.

Es ist auch möglich und erfindungsgemäß vorgesehen, dass das Sensorelement als ein Projektionsschirm ausgebildet sein kann, der bevorzugt eine Skala aufweist. Mittels eines derartigen Projektionsschirms ist die Fokussierung des Bearbeitungslaserstrahls mittels "Inaugenscheinnahme" durch eine Person überprüfbar. Eine derartige Ausgestaltung der Detektionsanordnung ist insbesondere zur Verwendung in Forschungsumgebungen und/ oder bei einer Justierung, Wartung, Erstinbetriebnahme der Detektionsanordnung vorteilhaft.

Bei einer besonders bevorzugten Umsetzung des Erfindungsgedankens ist es vorgesehen, dass das Objektiv zumindest eine optische Filtervorrichtung aufweist, die vorteilhafterweise so ausgebildet ist, dass sie ausschließlich für Licht mit der Wellenlänge des Pilotlaserstrahls durchlässig ist. Dabei ist es vorgesehen, dass die Filtervorrichtung sowohl ein optisches Filterelement, als auch mehrere optische Filterelemente aufweisen kann.

Besonders bevorzugt weist die optische Filtervorrichtung zwei aneinander angepasste optische Filterelemente auf, die vorzugsweise mittels einer Verstellvorrichtung verstellbar sind. Durch eine derartige Ausgestaltung der erfindungsgemäß vorgesehenen optischen Filtervorrichtung wird es ermöglicht, dass Fertigungstoleranzen der optischen Filterelemente ausgleichbar sind, sodass kostengünstigere optische Filterelemente in der optischen Filtervorrichtung verwendet werden können.

Bei einer vorteilhaften Ausgestaltung der erfindungsgemäßen Detektionsanordnung ist vorgesehen, dass die Detektionsanordnung eine Datenverarbeitungseinrichtung aufweist, wobei die Datenverarbeitungseinrichtung derart mit dem Sensorelement in Wirkverbindung gebracht oder bringbar ist, dass mittels der Datenverarbeitungseinrichtung ein von dem Sensorelement erzeugtes Sensorsignal auswertbar ist. Besonders bevorzugt weist das das Sensorelement einen Bildsensor auf, der insbesondere als ein CCD-Sensor ausgebildet sein kann.

Es ist erfindungsgemäß auch vorgesehen, dass das Sensorelement streifenförmig ausgebildet sein kann. Streifenförmig meint hier, dass eine Anzahl von gleichartigen Bildpunkten in einer ersten Richtung deutlich größer ist, als eine Anzahl von gleichartigen Bildpunkten in einer zweiten Richtung. Es ist vorteilhaferweise vorgesehen, dass das Sensorelement eine Auflösung von zumindest A x 128 Bildpunkten, bevorzugt von zumindest A x 256 Bildpunkten und besonders bevorzugt von zumindest A x 1024 Bildpunkten aufweist, wobei vorteilhafterweise vorgesehen ist, dass A einen Wert von höchsten 10 Bildpunkten, bevorzugt von höchstens 5 Bildpunkten und besonders bevorzugt von höchsten 2 Bildpunkten annimmt.

Eine vorteilhafte Umsetzung des Erfindungsgedankens sieht vor, dass auf der Datenverarbeitungseinrichtung eine Regel hinterlegt ist, wobei mittels der Regel, auf der Grundlage des Sensorsignals, bestimmbar ist, ob die Fokussierung des Bearbeitungslaserstrahls einem Vorgabewert entspricht. Bevorzugt ist eine Ablage der außeraxialen Abbildung von der optischen Achse des Objektivs auf dem Sensor gleich null. In diesem Fall ist die Fokussierung des Bearbeitungslaserstrahls korrekt und der Auftreffbereich des Bearbeitungslaserstrahls liegt im Brennpunkt.

Es ist vorteilhafterweiese vorgesehen, dass die außeraxiale Abbildung entlang des Sensorelements eine Ablage von der optischen Achse aufweist, wenn der Auftreffbereich nicht im Brennpunkt der Fokussierlinse liegt. Besonders bevorzugt sind dabei Richtung und Betrag der Ablage mit einer zwischen dem Auftreffbereichs und dem Brennpunkt ausgebildeten Distanz korreliert.

Die Erfindung betrifft auch eine Autofokusvorrichtung (siehe Anspruch 6).

Mittels einer derartigen erfindungsgemäßen Autofokusvorrichtung ist es ermöglicht, die Fokussierung des Bearbeitungslaserstrahls während eines Betriebs des Bearbeitungslaserstrahls dauerhaft zu überwachen und zu korrigieren, sodass in dem Auftreffpunkt stets eine maximale Bearbeitungslaserleistung einstellbar ist.

Es ist vorteilhafterweise vorgesehen, dass die Justiereinrichtung zumindest einen Aktuator aufweist, wobei mittels des Aktuators die Fokussieroptik verstellbar ist. Der Aktuator kann beispielsweise einen Elektromotor, ein Getriebeelement, Motorsensoren oder ähnliches aufweisen.

Bei einer vorteilhaften Ausgestaltung der erfindungsgemäßen Autofokusvorrichtung ist vorgesehen, dass die Justiereinrichtung und die Datenverarbeitungseinrichtung der Detektionsanordnung derart miteinander in Wirkverbindung gebracht und / oder bringbar sind, dass die Fokussieroptik mittels der Justiereinrichtung durch die Datenverarbeitungseinrichtung verstellbar ist. Durch eine derartige Ausgestaltung der Autofokusvorrichtung ist insbesondere eine vollständig automatisierte Fokussierung des Bearbeitungslaserstrahls realisierbar.

Die Datenverarbeitungseinrichtung kann beispielsweise ein PC, ein Laptop, ein Tabletcomputer oder ähnliches sein. Es ist dabei auch möglich, dass die Datenverarbeitungseinrichtung und die Autofokusvorrichtung mittels einer kabellosen Datenverbindung in Wirkverbindung miteinander gebracht sein können. Es ist vorteilhafterweise auch vorgesehen, dass die Datenverarbeitungseinrichtung einer Steuerungssoftware aufweisen kann, mittels derer die Fokussierung des Bearbeitungslaserstrahls überwachbar ist.

Eine vorteilhafte Umsetzung des Erfindungsgedankens sieht vor, dass auf der Datenverarbeitungseinrichtung eine Auswerteregel hinterlegt ist, wobei mittels der Auswerteregel auf der Grundlage des Sensorsignals bestimmbar ist, ob der Brennpunkt in dem Auftreffbereich des Bearbeitungslaserstrahls liegt oder ob der Auftreffbereich und der Brennpunkt eine Distanz in, oder entgegen der Strahlrichtung des Bearbeitungslaserstrahl zueinander aufweisen und wie groß die Distanz ist, wobei mittels einer auf der Datenverarbeitungseinrichtung hinterlegten Fokussierregel auf der Grundlage einer Ablage des Sensorsignals ein Korrekturwert bestimmbar ist und wobei durch den Korrekturwert bestimmt ist wie die Fokussieroptik verstellt werden muss, damit der Brennpunkt in den Auftreffbereich verlagerbar ist. Der Korrekturwert kann beispielsweise eine Länge und eine Richtung umfassen, um die ein optisches Element der Fokussieroptik verlagert werden muss, oder eine Anzahl und Richtung von Umdrehungen eines Stellrädchens, das mit dem zu verstellenden optischen Element in Wirkverbindung gebracht ist.

Eine vorteilhafte Ausgestaltung der Erfindung sieht vor, dass auf der Datenverarbeitungseinrichtung eine Justierregel hinterlegt ist, wobei durch die Datenverarbeitungseinrichtung mittels der Justierregel auf der Grundlage des Korrekturwerts ein Justierbefehl bestimmbar ist, wobei der Justierbefehl an die Justiereinrichtung übermittelbar ist und auf der Grundlage des Justierbefehls die Fokussieroptik mittels der Justiereinrichtung entsprechend des Korrekturwerts verstellbar ist und wobei durch eine Verstellung der Fokussieroptik um den Korrekturwert der Brennpunkt in den Auftreffbereich verlagerbar ist. Bevorzugt erfolgt die Verstellung der Fokussieroptik mittels des Aktuators. Dabei ist es vorteilhafterweise vorgesehen, dass der Justierbefehl beispielsweise eine Spannung und eine Betriebsdauer umfassen kann, mit der ein als Elektromotor ausgebildeter Aktuator betrieben werden soll, um den Bearbeitungslaserstrahl korrekt zu fokussieren.

Bei einer vorteilhaften Ausgestaltung der erfindungsgemäßen Autofokusvorrichtung ist vorgesehen, dass die Justiereinrichtung zumindest mit der Fokussierlinse der Fokussieroptik in Wirkverbindung gebracht und/ oder bringbar ist, wobei die Fokussierlinse mittels der Justiereinrichtung zumindest entlang der Strahlrichtung des Bearbeitungslaserstrahls verlagerbar ist und wobei durch ein Verlagern der Fokussierlinse mittels der Justiereinrichtung eine Lage des Brennpunkt der Fokussieroptik zumindest in Relation zu der Oberfläche veränderbar ist. Eine derartige Autofokusvorrichtung ist besonders einfach zu realisieren und besonders einfach in bestehende Laserbearbeitungssystem integrierbar, da Fokussierlinsen derartiger Laserbearbeitungssysteme üblicherweise bereits "ab Werk" mit einem Aktuator in Wirkverbindung gebracht sind.

Eine vorteilhafte Umsetzung des Erfindungsgedankens sieht vor, dass die Fokussieroptik eine Justierlinse aufweist, wobei die Justierlinse zwischen der Fokussierlinse und einer Laserlichtquelle, in einem Strahlengang des durch die Laserlichtquelle emittierten Bearbeitungslaserstrahls, angeordnet ist, wobei die Justiereinrichtung zumindest mit der Justierlinse in Wirkverbindung gebracht ist, wobei die Justierlinse mittels der Justiereinrichtung zumindest entlang der Strahlrichtung des Bearbeitungslaserstrahls verlagerbar ist und wobei durch ein Verlagern der Justierlinse eine Lage des Brennpunkt der Fokussieroptik zumindest in Relation zu der Oberfläche veränderbar ist. Eine derartige Autofokusvorrichtung kann vorteilhafterweise sehr kompakt ausgestaltet sein.

Es ist vorteilhafterweise auch vorgesehen, dass die Fokussieroptik mehrere Justierlinsen aufweisen kann, die alle mit der Justiereinrichtung in Wirkverbindung gebracht sein können. Eine derartige Ausgestaltung ist besonders vorteilhaft, wenn physikalische Eigenschaften des Bearbeitungslaserstrahls änderbar sein sollen, insbesondere seine Frequenz. Bearbeitungslaserstrahlen unterschiedlicher Frequenzen weisen unterschiedliche Beugungseigenschaften auf.

Eine vorteilhafte Ausgestaltung der Erfindung sieht vor, dass die Fokussieroptik eine Sammellinse aufweist, wobei die Sammellinse als eine plan-konvexe Linse, die Justierlinse als eine plan-konkave Linse und die Fokussierlinse als eine bi-konvexe Linse ausgebildet ist, wobei der Bearbeitungslaserstrahl nach einem Austritt aus der Laserlichtquelle zuerst durch die Justierlinse, danach durch die Sammellinse und danach durch die Fokussierlinse tritt, wobei durch ein verlagern der Justierlinse der Brennpunkt der Fokussieroptik entlang der Strahlrichtung des Bearbeitungslaserstrahls verlagerbar ist. Mittels einer derartig ausgebildeten Fokussieroptik ist eine besonders homogene Strahlführung des Bearbeitungslaserstrahls ermöglicht, da eine Strahlaufweitung minimierbar ist.

Bei einer vorteilhaften Ausgestaltung der erfindungsgemäßen Autofokusvorrichtung ist vorgesehen, dass die Fokussieroptik einen Umlenkspiegel aufweist, wobei der Umlenkspiegel zwischen der Sammellinse und der Fokussierlinse in dem Strahlengang des Bearbeitungslaserstrahls angeordnet ist, wobei der Bearbeitungslaserstrahl durch den Umlenkspiegel um einem Umlenkwinkel derart umlenkbar ist, dass er von der Sammellinse auf die Fokussierlinse umgelenkt ist. Es ist vorteilhafterweise auch vorgesehen, dass die Fokussieroptik mehrere Umlenkspiegel aufweisen kann.

Vorteilhafterweise ist sowohl bei der erfindungsgemäßen Detektionsanordnung als auch bei der erfindungsgemäßen Autofokusvorrichtung vorgesehen, dass diese in bereits bestehende Laserbearbeitungssysteme integrierbar sind. Dies ist insbesondere dadurch ermöglicht, dass die Detektionsanordnung und die Autofokusvorrichtung derart ausgebildet sein können, dass sie weitestgehend ohne eine störende Interaktion mit dem Bearbeitungslaserstrahl betreibbar sind.

Darüber hinaus ist es erfindungsgemäß ebenfalls vorgesehen, dass die Autofokusvorrichtung auch derart mit dem Bearbeitungslaserstrahl und/ oder der den Bearbeitungslaserstrahl aussenden Laserlichtquelle in Wirkverbindung gebracht/ bringbar sein kann, dass ein zwischen der Oberfläche und dem Bearbeitungslaserstrahl ausgebildeter Einstrahlwinkel veränderbar sein kann. Dies ist insbesondere vorteilhaft, wenn die erfindungsgemäße Autofokusvorrichtung eine der bereits beschriebenen Detektionsanordnungen mit zwei Pilotlasern aufweist, mittels derer unerwünschte Winkelablagen zwischen der Oberfläche und dem Bearbeitungslaserstrahl detektierbar sind.

Die Erfindung betrifft auch ein Fokussierverfahren zum Fokussieren eines Bearbeitungslaserstrahl, unter Verwendung einer Detektionsanordnung entsprechend einer der zuvor beschriebenen Ausführungsformen, oder mittels einer Autofokusvorrichtung entsprechend einer der zuvor beschriebenen Ausführungsformen, siehe Anspruch 14.

Mittels des erfindungsgemäßen Fokussierverfahrens ist vorteilhafterweise eine vollautomatisierte Fokussierung des Bearbeitungslaserstrahls realisierbar.

Besonders bevorzugt wird das Fokussierverfahren während des Betriebs des Bearbeitungslaserstrahls zyklisch wiederholt. Je kürzer dabei eine Zyklusdauer ist, um so kürzer sind diejenigen Zeiträume, in denen der Bearbeitungslaserstrahl nicht korrekt fokussiert ist und um so größer ist eine Bearbeitungsqualität.

Mittels der Autofokusvorrichtung und des Fokussierverfahrens ist es insbesondere auch ermöglicht, gewölbte und/ oder komplex geformte Oberflächen zu bearbeiten. Besonders vorteilhaft ist hierbei die Verwendung des Pilotlasers. Je geringer der Auftreffabstand zwischen dem Auftreffbereich und dem Pilotauftreffbereich gewählt ist, um so stärker gewölbte und/ oder strukturierte Oberflächen sind mit der Autofokusvorrichtung bearbeitbar.

Die erfindungsgemäße Autofokusvorrichtung und das erfindungsgemäße Fokussierverfahren weisen, gegenüber den aus dem Stand der Technik bekannten Vorrichtungen und Verfahren, eine erhöhte Toleranz bezüglich der Rauigkeit der zu bearbeitenden Oberfläche auf. Die Rauigkeit der Oberfläche beeinflusst lediglich eine Signalstärke des Sensorsignals, nicht jedoch seine Lage auf dem Sensorelement. Dadurch ist auch bei erhöhter Rauigkeit und einer damit einhergehenden Verringerung der Signalstärke bestimmbar, ob der Bearbeitungslaserstrahl korrekt fokussiert ist. Auch Veränderungen der Rauigkeit während der Bearbeitung, beispielsweise aufgrund von Asche, Zunder, Verfärbungen, Wechsel des Materials, oder Ähnlichem, beeinflussen die erfindungsgemäße Autofokusvorrichtung und das erfindungsgemäße Fokussierverfahren nicht.

Grundsätzlich sind mittels einer Laserbearbeitungsanlage, die mit einer erfindungsgemäßen Autofokusvorrichtung ausgerüstet ist, eine Vielzahl unterschiedlichster Materialien sowie unterschiedlichste Oberflächenformen bearbeitbar. Insbesondere sind das alle Arten von Metallen, beispielsweise Stähle, Aluminiumlegierungen, Buntmetalle, Edelmetalle, Titan usw., Keramiken, Kunststoffe, und sonstige Materialien, wie etwa Holz, Leder, Kork und Ähnliches.

Nachfolgend werden einige Ausführungsbeispiele des Erfindungsgedankens näher erläutert, die in der Zeichnung dargestellt sind. Es zeigen:
Figur 1 eine schematisch dargestellte Detektionsanordnung,
Figur 2 und 3 eine schematisch dargestellte Ausführungsformen von Autofokusvorrichtungen und
Figur 4 eine schematische Darstellung eines Fokussierverfahrens zum Fokussieren eines Bearbeitungslaserstrahls.

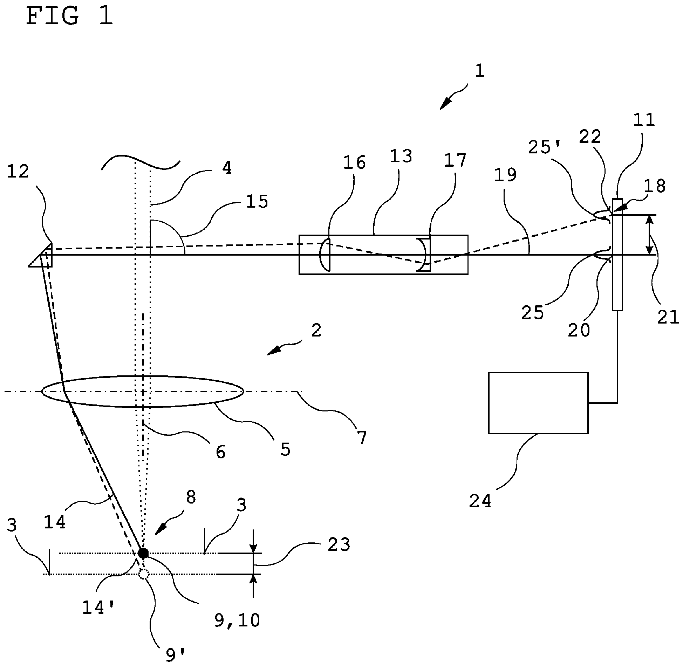

In Figur 1 ist eine schematische Darstellung einer Ausführungsform einer erfindungsgemäßen Detektionsanordnung 1 gezeigt. Mittels der gezeigten Detektionsanordnung 1 ist ein Fokussierung eines mittels einer Fokussieroptik 2 auf einer Oberfläche 3 gebündelten Bearbeitungslaserstrahls 4 überprüfbar.

Die gezeigte Fokussieroptik 2 weist eine einzelne Fokussierlinse 5 auf, durch die der Bearbeitungslaserstrahl 4 entlang einer optischen Achse der Fokussierlinse 6 aus der Fokussieroptik 2 austritt. Eine Hauptebene 7 der Fokussierlinse 5 ist parallel zu einem Beleuchtungsabschnitt 8 der Oberfläche 3 ausgerichtet. In dem Beleuchtungsabschnitt 8 ist ein Auftreffbereich 9 angeordnet, in dem der Bearbeitungslaserstrahl 4 auf die Oberfläche 3 trifft. Der Bearbeitungslaserstrahl 4 ist in einem Brennpunkt 10 der Fokussieroptik 2 gebündelt. Der Brennpunkt 10 ist dabei derjenige Abschnitt des Bearbeitungslaserstrahl 4, der nach dem Verlassen der Fokussierlinse 5 die höchste Leistungsdichte aufweist.

Die gezeigte Detektionsanordnung 1 weist ein Sensorelement 11, einen als Prisma ausgebildeten Spiegel 12 und ein Objektiv 13 auf. Der Spiegel 12 ist beabstandet von dem Bearbeitungslaserstrahl 4 so angeordnet, dass ein durch die Fokussierlinse 5 hindurch zurückgestrahlter Streulichtstrahl 14 in eine Detektionsebene umgelenkt wird, die in einem Detektionswinkel 15 zu dem Bearbeitungslaserstrahl 4 ausgerichtet ist, wobei der Streulichtstrahl 14 auf das in dieser Detektionsebene angeordnete Sensorelement 11 gerichtet wird.

Das Objektiv 13 weist eine plan-konvexe Linse 16 und eine plan-konkave Linse 17 auf, mittels derer der Streulichtstrahl 14 auf einer Sensorfläche 18 des Sensorelements 11 fokussierbar ist. Das Sensorelement 11 ist als ein senkrecht zu optischen Achse des Objektivs 19 ausgerichteter CCD-Streifen (ein streifenförmiger Bildsensor) ausgebildet.

Der Spiegel 12, das Objektiv 13 und das Sensorelement 11 sind bei der dargestellten Detektionsanordnung 1 so aneinander angepasst und zueinander ausgerichtet, dass der Streulichtstrahl 14 entlang der optischen Achse des Objektivs 19 aus dem Objektiv 13 austritt und auf einen Nullpunkt 20 des Sensorelements 11 trifft, wenn die Oberfläche 3 derart von der Fokussierlinse 5 beabstandet ist, dass der Auftreffbereich 9 im Brennpunkt 10 der Fokussierlinse 5 liegt.

Wenn ein Auftreffbereich 9' nicht im Brennpunkt 10 der Fokussierlinse 5 liegt, trifft ein Streulichtstrahl 14' nicht in dem Nullpunkt 20 auf das Sensorelement 11, sondern in einem um eine Ablage 21 von dem Nullpunkt 20 beabstandeten Ablagepunkt 22. Dabei sind Richtung und Betrag der Ablage 21 mit einer Distanz 23 des Auftreffbereichs 9' von dem Brennpunkt 10 korreliert.

Die gezeigte Detektionsanordnung 1 weist auch eine Datenverarbeitungseinrichtung 24 auf, die signalleitend mit dem Sensorelement 11 verbunden ist und mittels der in der Figur 1 schematisch dargestellten Sensorsignale 25 und 25' auswertbar sind. Auf der Datenverarbeitungseinrichtung 24 ist eine Regel hinterlegt, mittels der, auf deren Grundlage der Sensorsignale 25, 25' bestimmbar ist, ob die Fokussierung des Bearbeitungslaserstrahls 4 einem Vorgabewert entspricht.

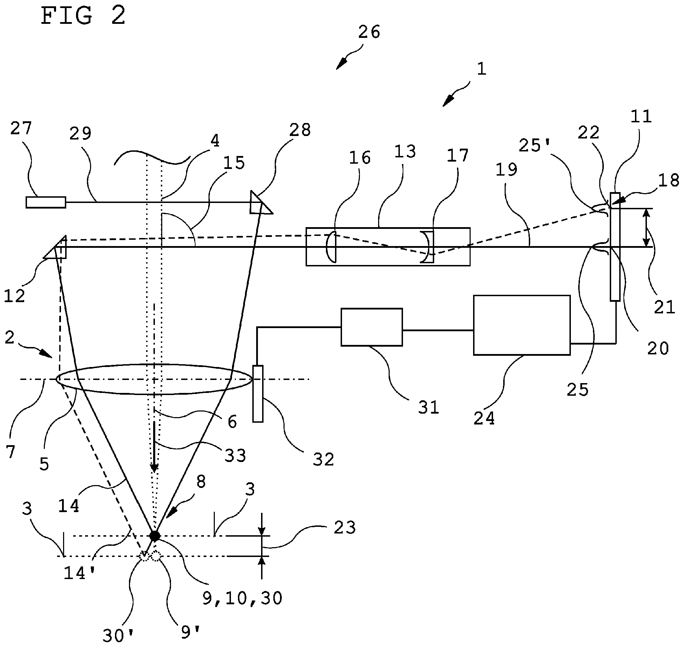

In Figur 2 ist eine schematisch dargestellte Autofokusvorrichtung 26 gezeigt, die eine Detektionsanordnung 1 aufweist. Anders als die in Figur 1 dargestellte Ausführungsform einer erfindungsgemäßen Detektionsanordnung 1, weist die in Figur 2 gezeigte Ausführungsform einen Pilotlaser 27 und einen als Prisma ausgebildeten Pilotspiegel 28 auf. Ein Pilotlaserstrahl 29 des Pilotlasers 27 trifft in einem Pilotauftreffbereich 30, innerhalb des Beleuchtungsabschnitts 8, auf die Oberfläche 3.

Der Streulichtstrahl 14, der durch den Spiegel 12 umgelenkt wird, geht aus dem Pilotlaserstrahl 29 hervor. Der Pilotlaser 27, der Bearbeitungslasererstrahl 4 und die Detektionsanordnung 1 sind derart aneinander angepasst und zueinander ausgerichtet, dass mittels des auf das Sensorelement 11 umgelenkten Streulichtstrahls 14 des Pilotlaserstrahls 29 die Fokussierung des Bearbeitungslaserstrahls 4 überprüfbar ist.

Die in Figur 2 dargestellte Autofokusvorrichtung 26 weist weiterhin eine Justiereinrichtung 31 auf, die mittels eines Aktuators 32 mit der Fokussierlinse 5 in Wirkverbindung gebracht ist. Durch den Aktuators 32 der Justiereinrichtung 31 ist die Fokussierlinse 5 entlang oder entgegen einer Strahlrichtung 33 des Bearbeitungslaserstrahls 4 verlagerbar. Dadurch ist auch der Brennpunkt 10 in Relation zu der Oberfläche 3 verlagerbar.

Die Justiereinrichtung 31 und die Datenverarbeitungseinrichtung 24 der Detektionsanordnung 1 sind derart miteinander in Wirkverbindung gebracht, dass die Fokussierlinse 5 mittels der Justiereinrichtung 31 durch die Datenverarbeitungseinrichtung 24 verstellbar ist. Auf der Datenverarbeitungseinrichtung 24 ist eine Auswerteregel hinterlegt, mittels der auf der Grundlage der Sensorsignale 25, 25' bestimmbar ist, ob der Brennpunkt 10 in dem Auftreffbereich 9 des Bearbeitungslaserstrahls 4 liegt, oder ob der Auftreffbereich 9' und der Brennpunkt 10 eine Distanz 23 in, oder entgegen der Strahlrichtung 33 des Bearbeitungslaserstrahls 4 zueinander aufweisen und wie groß diese Distanz 23 ist. Wenn der Auftreffpunkt 9' und der Brennpunkt 10 eine Distanz 23 zueinander aufweisen, dann trifft der Pilotlaserstrahl 29 in einem Pilotauftreffpunkt 30' auf die Oberfläche 3, sodass der Streulichtstrahl 14' gebildet wird. Der Streulichtstrahl 14' trifft dann in dem Ablagepunkt 22 auf das Sensorelement 11 und erzeugt das Sensorsignal 25'.

Auf der dargestellten Datenverarbeitungseinrichtung 24 ist auch eine Fokussierregel hinterlegt, mittels der auf der Grundlage der Ablage 21 ein Korrekturwert bestimmbar ist. Der Korrekturwert gibt an, wie die Fokussieroptik 2 verstellt werden muss, damit der Brennpunkt 10 in dem Auftreffbereich 9 liegt.

Um den Bearbeitungslaserstrahl 4 zu fokussieren, ist auf der gezeigten Datenverarbeitungseinrichtung 24 auch eine Justierregel hinterlegt mittels der durch die Datenverarbeitungseinrichtung 24 auf der Grundlage des Korrekturwerts ein Justierbefehl bestimmt wird, der an die Justiereinrichtung 31 übermittelt wird. Auf der Grundlage des Justierbefehls wird die Fokussieroptik 2 mittels des Aktuators 32 der Justiereinrichtung 31 entsprechend des Korrekturwerts verstellt und der Brennpunkt 10 in den Auftreffbereich 9 verlagert.

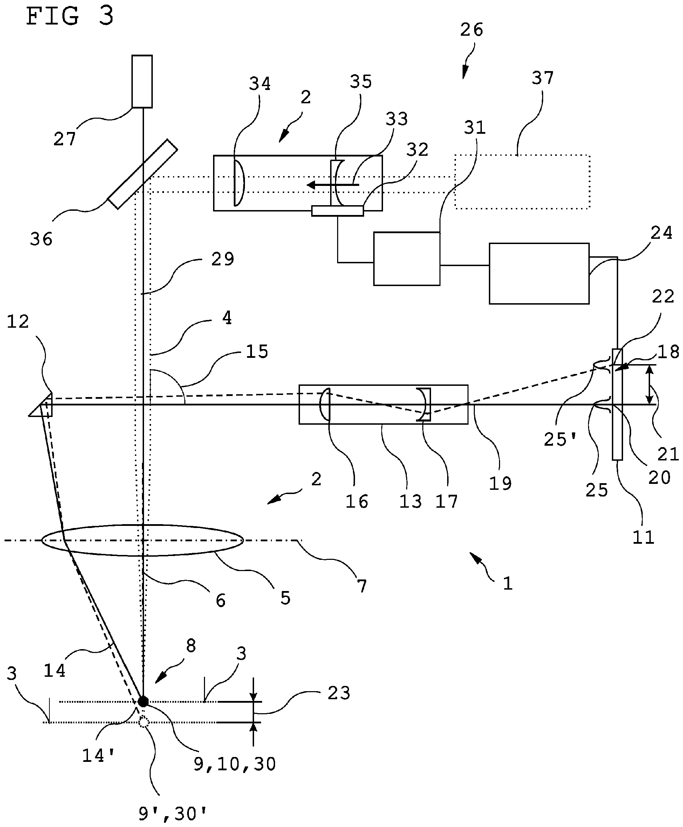

In Figur 3 ist eine Autofokusvorrichtung 26 mit einer alternativ ausgeführten Fokussieroptik 2 gezeigt, die besonders gut zur Verwendung im Rahmen eines Lasergravurverfahrens geeignet ist. Die Fokussieroptik 2 weist eine Sammellinse 34, eine Justierlinse 35, die Fokussierlinse 5 und einen Umlenkspiegel 36 auf.

Die Justierlinse 35 ist zwischen der Fokussierlinse 5 und einer den Bearbeitungslaserstrahl 4 emittierenden Laserlichtquelle 37, in einem Strahlengang des Bearbeitungslaserstrahls 4, angeordnet und mittels der Justiereinrichtung 31 entlang der Strahlrichtung 33 des Bearbeitungslaserstrahls 4 verlagerbar.

Die Sammellinse 34 ist als eine plan-konvexe Linse, die Justierlinse 35 als eine plan-konkave Linse und die Fokussierlinse 5 als eine bi-konvexe Linse ausgebildet. Der Bearbeitungslaserstrahl 4 tritt bei der gezeigten Autofokusvorrichtung 26 nach seinem Austritt aus der Laserlichtquelle 37 zuerst durch die Justierlinse 35, danach durch die Sammellinse 34 und danach durch die Fokussierlinse 5. Der Umlenkspiegel 36 ist zwischen der Sammellinse 34 und der Fokussierlinse 5 in dem Strahlengang des Bearbeitungslaserstrahls 4 angeordnet. Der Bearbeitungslaserstrahl 4 wird durch den Umlenkspiegel 36 von der Sammellinse 34 auf die Fokussierlinse 5 umgelenkt. Durch ein Verlagern der Justierlinse 35 entlang der Strahlrichtung des Bearbeitungslaserstrahls 4 wird der Brennpunkt 10 der Fokussieroptik 2 verlagert.

Der Umlenkspiegel 36 ist als ein halbdurchlässiger Spiegel ausgebildet. Oberhalb des Umlenkspiegels 36 ist der Pilotlaser 27 so angeordnet, dass der Pilotlaserstrahl 29 nach einem Durchlaufen des Umlenkspiegels 36 im Strahlengang des Bearbeitungslaserstrahls 4 verläuft.

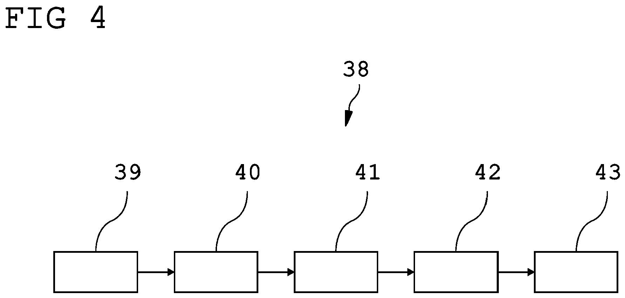

In Figur 4 ist Fokussierverfahren 38 zum Fokussieren eines Bearbeitungslaserstrahl, unter Verwendung einer erfindungsgemäßen Detektionsanordnung gezeigt. Bei dem Fokussierverfahren 38 wird zunächst in einem Einrichtungsschritt 39 ein Soll-Zustand des Sensorelements bestimmt. Der Soll-Zustand ist dann erreicht, wenn der Brennpunkt der Fokussieroptik in dem Auftreffbereich des Bearbeitungslasers liegt.

In einem nach dem Einrichtungsschritt 39 erfolgenden Beleuchtungsvorgang 40 die Oberfläche mittels des Bearbeitungslaserstrahls beleuchtet wird. Der Beleuchtungsvorgang 40 umfasst einen Messschritt 41, einen Bestimmungsschritt 42 und einen Justierschritt 43. In dem Messschritt 41 des Beleuchtungsvorgang 40 wird zunächst bestimmt, ob ein mittels des Sensorelements bestimmter Ist-Zustand dem Soll-Zustand entspricht. Im Falle einer Ablage zwischen dem Ist-Zustand und dem Soll-Zustand wird in dem auf den Messschritt 41 folgenden Bestimmungsschritt 42, auf der Grundlage des ermittelten Ist-Zustands, die Distanz des Brennpunktes der Fokussieroptik von dem Auftreffbereich bestimmt, und der Korrekturwert ermittelt. In dem auf den Bestimmungsschritt 42 folgenden Justierschritt 43 wird die Fokussieroptik um den Korrekturwert verstellt.

### BEZUGSZEICHENLISTE

- 1.: Detektionsanordnung
- 2.: Fokussieroptik
- 3.: Oberfläche
- 4.: Bearbeitungslaserstrahl
- 5.: Fokussierlinse
- 6.: optische Achse der Fokussierlinse
- 7.: Hauptebene
- 8.: Beleuchtungsabschnitt
- 9(`).: Auftreffbereich
- 10.: Brennpunkt
- 11.: Sensorelement
- 12.: Spiegel
- 13.: Objektiv
- 14(').: Streulichtstrahl
- 15.: Detektionswinkel
- 16.: plan-konvexe Linse
- 17.: plan-konkave Linse
- 18.: Sensorbereich
- 19.: optische Achse des Objektivs
- 20.: Nullpunkt
- 21.: Ablagewinkel
- 22.: Ablagepunkt
- 23.: Ablage
- 24.: Datenverarbeitungseinrichtung
- 25(`).: Sensorsignal
- 26.: Autofokusvorrichtung
- 27.: Pilotlaser
- 28.: Pilotspiegel
- 29.: Pilotlaserstrahl
- 30(`).: Pilotauftreffbereich
- 31.: Justiereinrichtung
- 32.: Aktuator
- 33.: Strahlrichtung
- 34.: Sammellinse
- 35.: Justierlinse
- 36.: Umlenkspiegel
- 37.: Laserlichtquelle
- 38.: Fokussierverfahren
- 39.: Einrichtungsschritt
- 40.: Beleuchtungsvorgang
- 41.: Messschritt
- 42.: Bestimmungsschritt
- 43.: Justierschritt

## Patentansprüche

1. Detektionsanordnung (1) zum Überwachen einer Fokussierung eines mittels einer Fokussieroptik (2) auf einer Oberfläche (3) gebündelten Bearbeitungslaserstrahls (4), wobei die Fokussieroptik (2) zumindest eine Fokussierlinse (5) aufweist, durch die der Bearbeitungslaserstrahl (4) entlang einer optischen Achse der Fokussierlinse (6) aus der Fokussieroptik (2) austritt und wobei eine Hauptebene (7) der Fokussierlinse (5) parallel zu einem Beleuchtungsabschnitt (8) der Oberfläche (3) ausgerichtet ist, in dem der Bearbeitungslaserstrahl (4) in einem Auftreffbereich (9,9') auf die Oberfläche (3) trifft, wobei der Bearbeitungslaserstrahl (4) in einem Brennpunkt (10) der Fokussieroptik (2) gebündelt ist, und wobei die Detektionsanordnung (1) zumindest ein Sensorelement (11) und zumindest einen Spiegel (12) aufweist, **dadurch gekennzeichnet, dass** der Spiegel (12) ein planer Spiegel (12) ist, wobei der plane Spiegel (12) in Verwendung mit der Fokussieroptik (2) beabstandet von dem Bearbeitungslaserstrahl (4) so angeordnet ist, dass ein durch die Fokussierlinse (5) hindurch zurückgestrahlter Streulichtstrahl (14,14') mittels des planen Spiegels (12) in eine in einem Detektionswinkel (15) zu dem Bearbeitungslaserstrahl (4) ausgerichtete Detektionsebene umgelenkt und auf das in dieser Detektionsebene angeordnete Sensorelement (11) gerichtet wird.

2. Detektionsanordnung (1) nach Anspruch 1, **dadurch gekennzeichnet, dass** die Detektionsanordnung (1) einen Pilotlaser (27) aufweist und/ oder mit einem Pilotlaser (27) in Wirkverbindung bringbar ist, wobei ein Pilotlaserstrahl (29) des Pilotlasers (27) in einem Pilotauftreffbereich (30,30') innerhalb des Beleuchtungsabschnitts (8) auf die Oberfläche (3) trifft, wobei der Streulichtstrahl (14,14'), der durch den Spiegel (12) umgelenkt wird, aus dem Pilotlaserstrahl (29) hervorgeht und wobei der Pilotlaser (27), der Bearbeitungslaserstrahl (4) und die Detektionsanordnung (1) derart aneinander angepasst und zueinander ausgerichtet sind, dass mittels des auf das Sensorelement (11) umgelenkten Streulichtstrahls (14,14') des Pilotlaserstrahls (27) eine Fokussierung des Bearbeitungslaserstrahls (4) überprüfbar ist.

3. Detektionsanordnung (1) nach einem der Ansprüche 1 oder 2, **dadurch gekennzeichnet, dass** die Detektionsanordnung (1) ein Objektiv (13) aufweist, wobei mittels des Objektivs (13) der von dem Spiegel (12) umgelenkte Streulichtstrahl (14,14') auf dem Sensorelement (11) fokussierbar ist, wobei mittels des Objektivs (13) eine außeraxiale Abbildung eines Pilotauftreffbereichs (30,30') des Pilotlaserstrahls (29) und/ oder des Auftreffbereichs (9,9') des Bearbeitungslaserstrahls (4) in dem Beleuchtungsabschnitts (8) auf das Sensorelement (11) projizierbar ist.

4. Detektionsanordnung (1) nach einem der Ansprüche 1 bis 3, **dadurch gekennzeichnet, dass** die Detektionsanordnung (1) eine Datenverarbeitungseinrichtung (24) aufweist, wobei die Datenverarbeitungseinrichtung (24) derart mit dem Sensorelement (11) in Wirkverbindung gebracht oder bringbar ist, dass mittels der Datenverarbeitungseinrichtung (24) ein von dem Sensorelement (11) erzeugtes Sensorsignal (25,25') auswertbar ist.

5. Detektionsanordnung (1) nach Anspruch 4, **dadurch gekennzeichnet, dass** auf der Datenverarbeitungseinrichtung (24) eine Regel hinterlegt ist, wobei mittels der Regel auf der Grundlage des Sensorsignals (25,25') bestimmbar ist, ob die Fokussierung des Bearbeitungslaserstrahls (4) einem Vorgabewert entspricht.

6. Autofokusvorrichtung (26) **gekennzeichnet durch** eine Detektionsanordnung (1) nach einem der Ansprüche 1 bis 5, wobei die Autofokusvorrichtung (26) eine Justiereinrichtung (31) aufweist, wobei die Justiereinrichtung (31) mit zumindest einem optischen Element der Fokussieroptik (2) derart in Wirkverbindung gebracht/ bringbar ist, dass mittels der Justiereinrichtung (31) der Brennpunkt (10) der Fokussieroptik (2) entlang einer Strahlrichtung (33) des Bearbeitungslaserstrahls (4) verlagerbar ist.

7. Autofokusvorrichtung (26) nach Anspruch 6, **dadurch gekennzeichnet, dass** die Justiereinrichtung (31) und die Datenverarbeitungseinrichtung (24) der Detektionsanordnung (1) derart miteinander in Wirkverbindung gebracht und/ oder bringbar sind, dass die Fokussieroptik (2) mittels der Justiereinrichtung (31) durch die Datenverarbeitungseinrichtung (24) verstellbar ist.

8. Autofokusvorrichtung (26) nach einem der Ansprüche 6 oder 7, **dadurch gekennzeichnet, dass** auf der Datenverarbeitungseinrichtung (24) eine Auswerteregel hinterlegt ist, wobei mittels der Auswerteregel auf der Grundlage des Sensorsignals (25,25') bestimmbar ist, ob der Brennpunkt (10) in dem Auftreffbereich (9) des Bearbeitungslaserstrahls (4) liegt oder ob der Auftreffbereich (9') und der Brennpunkt (10) eine Distanz (23) in, oder entgegen der Strahlrichtung (33) des Bearbeitungslaserstrahls (4) zueinander aufweisen und wie groß die Distanz (23) ist, wobei mittels einer auf der Datenverarbeitungseinrichtung (24) hinterlegten Fokussierregel auf der Grundlage einer Ablage (21) des Sensorsignals (25') ein Korrekturwert bestimmbar ist und wobei durch den Korrekturwert bestimmt ist wie die Fokussieroptik (2) verstellt werden muss, damit der Brennpunkt (10) in den Auftreffbereich (9) verlagerbar ist.

9. Autofokusvorrichtung (26) nach den Ansprüchen 7 und 8, **dadurch gekennzeichnet, dass** auf der Datenverarbeitungseinrichtung (24) eine Justierregel hinterlegt ist, wobei durch die Datenverarbeitungseinrichtung (24) mittels der Justierregel auf der Grundlage des Korrekturwerts ein Justierbefehl bestimmbar ist, wobei der Justierbefehl an die Justiereinrichtung (31) übermittelbar ist und auf der Grundlage des Justierbefehls die Fokussieroptik (2) mittels der Justiereinrichtung (31) entsprechend des Korrekturwerts verstellbar ist und wobei durch eine Verstellung der Fokussieroptik (2) um den Korrekturwert der Brennpunkt (10) in den Auftreffbereich (9) verlagerbar ist.

10. Autofokusvorrichtung (26) nach einem der Ansprüche 6 bis 9, **dadurch gekennzeichnet, dass** die Justiereinrichtung (31) zumindest mit der Fokussierlinse (5) der Fokussieroptik (2) in Wirkverbindung gebracht und/ oder bringbar ist, wobei die Fokussierlinse (5) mittels der Justiereinrichtung (31) zumindest entlang der Strahlrichtung (33) des Bearbeitungslaserstrahls (4) verlagerbar ist und wobei durch ein Verlagern der Fokussierlinse (5) mittels der Justiereinrichtung (31) eine Lage des Brennpunkt (10) der Fokussieroptik (2) zumindest in Relation zu der Oberfläche (3) veränderbar ist.

11. Autofokusvorrichtung (26) nach einem der Ansprüche 6 bis 10, **dadurch gekennzeichnet, dass** die Fokussieroptik (2) eine Justierlinse (35) aufweist, wobei die Justierlinse (35) zwischen der Fokussierlinse (5) und einer Laserlichtquelle (37), in einem Strahlengang des durch die Laserlichtquelle (37) emittierten Bearbeitungslaserstrahls (4), angeordnet ist, wobei die Justiereinrichtung (31) zumindest mit der Justierlinse (35) in Wirkverbindung gebracht ist, wobei die Justierlinse (35) mittels der Justiereinrichtung (31) zumindest entlang der Strahlrichtung (33) des Bearbeitungslaserstrahls (4) verlagerbar ist und wobei durch ein Verlagern der Justierlinse (35) eine Lage des Brennpunkt (10) der Fokussieroptik (2) zumindest in Relation zu der Oberfläche (3) veränderbar ist.

12. Autofokusvorrichtung (26) nach Anspruch 11, **dadurch gekennzeichnet, dass** die Fokussieroptik (2) eine Sammellinse (34) aufweist, wobei die Sammellinse (34) als eine plan-konvexe Linse, die Justierlinse (35) als eine plan-konkave Linse und die Fokussierlinse (5) als eine bi-konvexe Linse ausgebildet ist, wobei der Bearbeitungslaserstrahl (4) nach einem Austritt aus der Laserlichtquelle (37) zuerst durch die Justierlinse (35), danach durch die Sammellinse (34) und danach durch die Fokussierlinse (5) tritt, wobei durch ein verlagern der Justierlinse (35) der Brennpunkt (10) der Fokussieroptik (2) entlang der Strahlrichtung (33) des Bearbeitungslaserstrahls (4) verlagerbar ist.

13. Autofokusvorrichtung (26) nach Anspruch 12, **dadurch gekennzeichnet, dass** die Fokussieroptik (2) einen Umlenkspiegel (36) aufweist, wobei der Umlenkspiegel (36) zwischen der Sammellinse (34) und der Fokussierlinse (5) in dem Strahlengang des Bearbeitungslaserstrahls (4) angeordnet ist, wobei der Bearbeitungslaserstrahl (4) durch den Umlenkspiegel (36) um einem Umlenkwinkel derart umlenkbar ist, dass er von der Sammellinse (34) auf die Fokussierlinse (5) umgelenkt ist.

14. Fokussierverfahren (38) zum Fokussieren eines Bearbeitungslaserstrahl (4), **gekennzeichnet durch** die Verwendung einer Detektionsanordnung (1) nach einem der Ansprüche 1 bis 5, oder durch die Verwendung einer Autofokusvorrichtung (26) nach einem der Ansprüche 6 bis 13, wobei zunächst in einem Einrichtungsschritt (39) ein Soll-Zustand des Sensorelements (11) bestimmt wird, wobei der Soll-Zustand dann erreicht ist, wenn der Brennpunkt (10) der Fokussieroptik (2) in dem Auftreffbereich (9) des Bearbeitungslaserstrahls (4) liegt, wobei in einem nach dem Einrichtungsschritt (39) erfolgenden Beleuchtungsvorgang (40) die Oberfläche (3) mittels des Bearbeitungslaserstrahls (4) beleuchtet wird, wobei der Beleuchtungsvorgang (40) einen Messschritt (41), einen Bestimmungsschritt (42) und einen Justierschritt umfasst, wobei in dem Messschritt (41) des Beleuchtungsvorgang (40) zunächst bestimmt wird, ob ein mittels des Sensorelements (11) bestimmter Ist-Zustand dem Soll-Zustand entspricht, wobei im Falle einer Ablage (21) zwischen dem Ist-Zustand und dem Soll-Zustand in einem auf den Messschritt (41) folgenden Bestimmungsschritt (42) auf der Grundlage des ermittelten Ist-Zustands die Distanz (23) des Brennpunkts (10) der Fokussieroptik (2) von dem Auftreffbereich (9') zumindest entlang der Strahlrichtung (33) des Bearbeitungslaserstrahls (4) bestimmt und der Korrekturwert ermittelt wird und wobei in einem auf den Bestimmungsschritt folgenden Justierschritt (43) die Fokussieroptik (2) um den Korrekturwert verstellt wird.

## Claims

1. Detection arrangement (1) for monitoring focusing of a processing laser beam (4) bundled by means of focusing optics (2) on a surface (3), wherein the focusing optics (2) comprise at least one focusing lens (5) through which the processing laser beam (4) exits the focusing optics (2) along an optical axis of the focusing lens (6) and wherein a main plane (7) of the focusing lens (5) is oriented parallel to an illumination section (8) of the surface (3) in which the processing laser beam (4) strikes the surface (3) in an impact region (9, 9'), wherein the processing laser beam (4) is bundled at a focal point (10) of the focusing optics (2), and wherein the detection arrangement (1) comprises at least one sensor element (11) and at least one mirror (12), **characterised in that** the mirror (12) is a flat mirror (12), wherein the flat mirror (12) is arranged spaced at a distance from the processing laser beam (4) in use with the focusing optics (2) such that a scattered light beam (14, 14') reflected through the focusing lens (5) is deflected by means of the flat mirror (12) into a detection plane oriented at a detection angle (15) to the processing laser beam (4) and is directed onto the sensor element (11) arranged in this detection plane.

2. Detection arrangement (1) according to claim 1, **characterised in that** the detection arrangement (1) comprises a pilot laser (27) and/or can be brought into operative connection with a pilot laser (27), wherein a pilot laser beam (29) of the pilot laser (27) strikes the surface (3) in a pilot impact region (30, 30') within the illumination section (8), wherein the scattered light beam (14, 14'), which is deflected by the mirror (12), emerges from the pilot laser beam (29) and wherein the pilot laser (27), the processing laser beam (4) and the detection arrangement (1) are adapted to one another and oriented to one another such that focusing of the processing laser beam (4) can be checked by means of the scattered light beam (14, 14') of the pilot laser beam (27) deflected onto the sensor element (11).

3. Detection arrangement (1) according to one of claims 1 or 2, **characterised in that** the detection arrangement (1) comprises an object lens (13), wherein by means of the object lens (13) the scattered light beam (14, 14') deflected by the mirror (12) can be focused on the sensor element (11), wherein off-axis mapping of a pilot impact region (30, 30') of the pilot laser beam (29) and/or of the impact region (9, 9') of the processing laser beam (4) in the illumination section (8) can be projected onto the sensor element (11) by means of the object lens (13).

4. Detection arrangement (1) according to any one of claims 1 to 3, **characterised in that** the detection arrangement (1) comprises a data processing device (24), wherein the data processing device (24) is or can be brought into operative connection with the sensor element (11) such that a sensor signal (25, 25') produced by the sensor element (11) can be evaluated by means of the data processing device (24).

5. Detection arrangement (1) according to claim 4, **characterised in that** a rule is stored on the data processing device (24), wherein it can be determined by means of the rule on the basis of the sensor signal (25, 25') whether the focusing of the processing laser beam (4) corresponds to a standard value.

6. Autofocus device (26), **characterised by** a detection arrangement (1) according to any one of claims 1 to 5, wherein the autofocus device (26) comprises an adjustment device (31), wherein the adjustment device (31) is/can be brought into operative connection with at least one optical element of the focusing optics (2) such that the focal point (10) of the focusing optics (2) can be displaced by means of the adjustment device (31) along a beam direction (33) of the processing laser beam (4).

7. Autofocus device (26) according to claim 6, **characterised in that** the adjustment device (31) and the data processing device (24) of the detection arrangement (1) are and/or can be brought into operative connection with one another such that the focusing optics (2) can be adjusted by the data processing device (24) by means of the adjustment device (31).

8. Autofocus device (26) according to one of claims 6 or 7, **characterised in that** an evaluation rule is stored on the data processing device (24), wherein it can be determined by means of the evaluation rule on the basis of the sensor signal (25, 25') whether the focal point (10) lies in the impact region (9) of the processing laser beam (4) or whether the impact region (9') and the focal point (10) have a distance (23) from one another in or opposite to the beam direction (33) of the processing laser beam (4) and how great the distance (23) is, wherein a correction value can be determined by means of a focusing rule stored on the data processing device (24) on the basis of deposition (21) of the sensor signal (25') and wherein it is determined by the correction value how the focusing optics (2) must be adjusted so that the focal point (10) can be displaced into the impact region (9).

9. Autofocus device (26) according to claims 7 and 8, **characterised in that** an adjustment rule is stored on the data processing device (24), wherein an adjustment command can be determined by the data processing device (24) by means of the adjustment rule on the basis of the correction value, wherein the adjustment command can be transmitted to the adjustment device (31) and on the basis of the adjustment command, the focusing optics (2) are adjustable by means of the adjustment device (31) according to the correction value and wherein the focal point (10) can be displaced into the impact region (9) by adjustment of the focusing optics (2) by the correction value.

10. Autofocus device (26) according to any one of claims 6 to 9, **characterised in that** the adjustment device (31) is and/or can be brought into operative connection at least with the focusing lens (5) of the focusing optics (2), wherein the focusing lens (5) can be displaced by means of the adjustment device (31) at least along the beam direction (33) of the processing laser beam (4) and wherein by displacement of the focusing lens (5) by means of the adjustment device (31), a position of the focal point (10) of the focusing optics (2) is variable at least in relation to the surface (3).

11. Autofocus device (26) according to any one of claims 6 to 10, **characterised in that** the focusing optics (2) comprise an adjustment lens (35), wherein the adjustment lens (35) is arranged between the focusing lens (5) and a laser light source (37) in a beam path of the processing laser beam (4) emitted by the laser light source (37), wherein the adjustment device (31) is brought into operative connection at least with the adjustment lens (35), wherein the adjustment lens (35) can be displaced by means of the adjustment device (31) at least along the beam direction (33) of the processing laser beam (4) and wherein by displacement of the adjustment lens (35) a position of the focal point (10) of the focusing optics (2) is variable at least in relation to the surface (3).

12. Autofocus device (26) according to claim 11, **characterised in that** the focusing optics (2) comprise a converging lens (34), wherein the converging lens (34) is configured as a plano-convex lens, the adjustment lens (35) as a plano-concave lens and the focusing lens (5) as a biconvex lens, wherein the processing laser beam (4), after exiting the laser light source (37), passes first through the adjustment lens (35), thereafter through the converging lens (34) and thereafter through the focusing lens (5), wherein the focal point (10) of the focusing optics (2) can be displaced along the beam direction (33) of the processing laser beam (4) by displacement of the adjustment lens (35).

13. Autofocus device (26) according to claim 12, **characterised in that** the focusing optics (2) comprise a deflection mirror (36), wherein the deflection mirror (36) is arranged between the converging lens (34) and the focusing lens (5) in the beam path of the processing laser beam (4), wherein the processing laser beam (4) can be deflected by the deflection mirror (36) by a deflection angle such that it is deflected by the converging lens (34) onto the focusing lens (5) .

14. Focusing method (38) for focusing a processing laser beam (4), **characterised by** the use of a detection arrangement (1) according to any one of claims 1 to 5, or by the use of an autofocus device (26) according to any one of claims 6 to 13, wherein first a target state of the sensor element (11) is determined in a set-up step (39), wherein the target state is achieved when the focal point (10) of the focusing optics (2) lies in the impact region (9) of the processing laser beam (4), wherein in an illumination process (40) taking place after the set-up step (39), the surface (3) is illuminated by means of the processing laser beam (4), wherein the illumination process (40) comprises a measuring step (41), a determination step (42) and an adjustment step, wherein in the measuring step (41) of the illumination process (40) it is first determined whether an actual state determined by means of the sensor element (11) corresponds to the target state, wherein in the case of a deposition (21) between the actual state and the target state, in a determination step (42) following the measuring step (41) the distance (23) of the focal point (10) of the focusing optics (2) from the impact region (9') at least along the beam direction (33) of the processing laser beam (4) is determined on the basis of the actual state ascertained and the correction value is determined and wherein in an adjustment step (43) following the determination step, the focusing optics (2) are adjusted by the correction value.

## Revendications

1. Agencement de détection (1) pour surveiller une focalisation d'un faisceau laser d'usinage (4) concentré sur une surface (3) au moyen d'une optique de focalisation (2), l'optique de focalisation (2) présentant au moins une lentille de focalisation (5), à travers laquelle le faisceau laser d'usinage (4) sort de l'optique de focalisation (2) le long d'un axe optique de la lentille de focalisation (6) et un plan principal (7) de la lentille de focalisation (5) étant orienté parallèlement à une section d'éclairage (8) de la surface (3), dans laquelle le faisceau laser d'usinage (4) est incident sur la surface (3) dans une zone d'incidence (9, 9'), le faisceau laser d'usinage (4) étant concentré dans un point focal (10) de l'optique de focalisation (2), et l'agencement de détection (1) présentant au moins un élément capteur (11) et au moins un miroir (12), **caractérisé en ce que** le miroir (12) est un miroir plan (12), le miroir plan (12) en utilisation avec l'optique de focalisation (2) étant agencé à distance du faisceau laser d'usinage (4), de telle sorte qu'un faisceau de lumière diffusée (14, 14') renvoyé à travers la lentille de focalisation (5) est dévié au moyen du miroir plan (12) dans un plan de détection orienté selon un angle de détection (15) par rapport au faisceau laser d'usinage (4) et orienté vers l'élément capteur (11) agencé dans ce plan de détection.

2. Agencement de détection (1) selon la revendication 1, **caractérisé en ce que** l'agencement de détection (1) présente un laser pilote (27) et/ou peut être mis en liaison active avec un laser pilote (27), un faisceau laser pilote (29) du laser pilote (27) étant incident sur la surface (3) dans une zone d'incidence pilote (30, 30') à l'intérieur de la section d'éclairage (8), le faisceau de lumière diffusée (14, 14') dévié par le miroir (12) provenant du faisceau laser pilote (29), et le laser pilote (27), le faisceau laser d'usinage (4) et l'agencement de détection (1) étant adaptés les uns aux autres et alignés les uns par rapport aux autres de telle sorte qu'une focalisation du faisceau laser d'usinage (4) peut être vérifiée au moyen du faisceau de lumière diffusée (14, 14') du faisceau laser pilote (27), qui est déviée vers l'élément capteur (11).

3. Agencement de détection (1) selon l'une quelconque des revendications 1 ou 2, **caractérisé en ce que** l'agencement de détection (1) présente un objectif (13), le faisceau de lumière diffusée (14, 14') dévié par le miroir (12) pouvant être focalisé sur l'élément capteur (11) au moyen de l'objectif (13), une image extra-axiale d'une zone d'incidence pilote (30, 30') du faisceau laser pilote (29) et/ou de la zone d'incidence (9, 9') du faisceau laser d'usinage (4) dans la section d'éclairage (8) pouvant être projetée sur l'élément capteur (11) au moyen de l'objectif (13).

4. Agencement de détection (1) selon l'une quelconque des revendications 1 à 3, **caractérisé en ce que** l'agencement de détection (1) présente un appareil de traitement de données (24), l'appareil de traitement de données (24) étant mis ou pouvant être mis en liaison active avec l'élément capteur (11) de telle sorte qu'un signal de capteur (25, 25') généré par l'élément capteur (11) peut être évalué au moyen de l'appareil de traitement de données (24).

5. Agencement de détection (1) selon la revendication 4, **caractérisé en ce qu'**une règle est enregistrée dans l'appareil de traitement de données (24), la règle permettant de déterminer, sur la base du signal de capteur (25, 25'), si la focalisation du faisceau laser d'usinage (4) correspond à une valeur de consigne.

6. Dispositif de focalisation automatique (26) **caractérisé par** un agencement de détection (1) selon l'une quelconque des revendications 1 à 5, le dispositif de focalisation automatique (26) présentant un appareil d'ajustement (31), l'appareil d'ajustement (31) étant mis/pouvant être mis en liaison active avec au moins un élément optique de l'optique de focalisation (2) de telle sorte qu'au moyen de l'appareil d'ajustement (31), le point focal (10) de l'optique de focalisation (2) peut être déplacé le long d'une direction de faisceau (33) du faisceau laser d'usinage (4).

7. Dispositif de focalisation automatique (26) selon la revendication 6, **caractérisé en ce que** l'appareil d'ajustement (31) et l'appareil de traitement de données (24) de l'agencement de détection (1) sont mis et/ou peuvent être mis en liaison active l'un avec l'autre de telle sorte que l'optique de focalisation (2) peut être réglée au moyen de l'appareil d'ajustement (31) par l'appareil de traitement de données (24).

8. Dispositif de focalisation automatique (26) selon l'une quelconque des revendications 6 ou 7, **caractérisé en ce qu'**une règle d'évaluation est enregistrée dans l'appareil de traitement de données (24), la règle d'évaluation permettant de déterminer, sur la base du signal de capteur (25, 25'), si le point focal (10) se trouve dans la zone d'incidence (9) du faisceau laser d'usinage (4) ou si la zone d'incidence (9') et le point focal (10) présentent une distance (23) dans, ou à l'encontre de la direction de faisceau (33) du faisceau laser d'usinage, l'un par rapport à l'autre (4) et quelle est la distance (23), une valeur de correction pouvant être déterminée au moyen d'une règle de focalisation enregistrée dans l'appareil de traitement de données (24) sur la base d'un dépôt (21) du signal de capteur (25') et la valeur de correction déterminant la manière dont l'optique de focalisation (2) doit être réglée pour que le point focal (10) puisse être déplacé dans la zone d'incidence (9).

9. Dispositif de focalisation automatique (26) selon les revendications 7 et 8, **caractérisé en ce qu'**une règle d'ajustement est enregistrée dans l'appareil de traitement de données (24), une instruction d'ajustement pouvant être déterminée par l'appareil de traitement de données (24) au moyen de la règle d'ajustement sur la base de la valeur de correction, l'instruction d'ajustement pouvant être transmise à l'appareil d'ajustement (31) et, sur la base de l'instruction d'ajustement, l'optique de focalisation (2) pouvant être réglée au moyen de l'appareil d'ajustement (31) en fonction de la valeur de correction et le point focal (10) pouvant être déplacé dans la zone d'incidence (9) par un réglage de l'optique de focalisation (2) de la valeur de correction.

10. Dispositif de focalisation automatique (26) selon l'une quelconque des revendications 6 à 9, **caractérisé en ce que** l'appareil d'ajustement (31) est mis et/ou peut être mis en liaison active au moins avec la lentille de focalisation (5) de l'optique de focalisation (2), la lentille de focalisation (5) pouvant être déplacée au moyen de l'appareil d'ajustement (31) au moins le long de la direction de faisceau (33) du faisceau laser d'usinage (4) et une position du point focal (10) de l'optique de focalisation (2) pouvant être modifiée au moins par rapport à la surface (3) par un déplacement de la lentille de focalisation (5) au moyen de l'appareil d'ajustement (31).

11. Dispositif de focalisation automatique (26) selon l'une quelconque des revendications 6 à 10, **caractérisé en ce que** l'optique de focalisation (2) présente une lentille d'ajustement (35), la lentille d'ajustement (35) étant agencée entre la lentille de focalisation (5) et une source de lumière laser (37), dans un trajet de faisceau du faisceau laser d'usinage (4) émis par la source de lumière laser (37), l'appareil d'ajustement (31) étant mis en liaison active au moins avec la lentille d'ajustement (35), la lentille d'ajustement (35) pouvant être déplacée au moyen de l'appareil d'ajustement (31) au moins le long de la direction de faisceau (33) du faisceau laser d'usinage (4) et une position du point focal (10) de l'optique de focalisation (2) pouvant être modifiée au moins par rapport à la surface (3) par un déplacement de la lentille d'ajustement (35).

12. Dispositif de focalisation automatique (26) selon la revendication 11, **caractérisé en ce que** l'optique de focalisation (2) présente une lentille convergente (34), la lentille convergente (34) étant configurée sous la forme d'une lentille plan-convexe, la lentille d'ajustement (35) sous la forme d'une lentille plan-concave et la lentille de focalisation (5) sous la forme d'une lentille biconvexe, le faisceau laser d'usinage (4), après une sortie de la source de lumière laser (37), passant d'abord par la lentille d'ajustement (35), puis par la lentille convergente (34) et ensuite par la lentille de focalisation (5), le point focal (10) de l'optique de focalisation (2) pouvant être déplacé le long de la direction de faisceau (33) du faisceau laser d'usinage (4) par un déplacement de la lentille d'ajustement (35) .

13. Dispositif de focalisation automatique (26) selon la revendication 12, **caractérisé en ce que** l'optique de focalisation (2) présente un miroir de déviation (36), le miroir de déviation (36) étant agencé entre la lentille convergente (34) et la lentille de focalisation (5) dans le trajet de faisceau du faisceau laser d'usinage (4), le faisceau laser d'usinage (4) pouvant être dévié par le miroir de déviation (36) d'un angle de déviation de telle sorte qu'il est dévié de la lentille convergente (34) vers la lentille de focalisation (5).

14. Procédé de focalisation (38) pour focaliser un faisceau laser d'usinage (4), **caractérisé par** l'utilisation d'un agencement de détection (1) selon l'une quelconque des revendications 1 à 5, ou par l'utilisation d'un dispositif de focalisation automatique (26) selon l'une quelconque des revendications 6 à 13, un état de consigne de l'élément capteur (11) étant d'abord déterminé dans une étape d'installation (39), l'état de consigne étant atteint lorsque le point focal (10) de l'optique de focalisation (2) se trouve dans la zone d'incidence (9) du faisceau laser d'usinage (4), la surface (3) étant éclairée au moyen du faisceau laser d'usinage (4) dans une opération d'éclairage (40) qui a lieu après l'étape d'installation (39), l'opération d'éclairage (40) comprenant une étape de mesure (41), une étape de détermination (42) et une étape d'ajustement, l'étape de mesure (41) de l'opération d'éclairage (40) déterminant tout d'abord si un état réel déterminé au moyen de l'élément capteur (11) correspond à l'état de consigne, dans le cas d'un décalage (21) entre l'état réel et l'état de consigne, dans une étape de détermination (42) suivant l'étape de mesure (41), sur la base de l'état réel déterminé, la distance (23) du point focal (10) de l'optique de focalisation (2) par rapport à la zone d'incidence (9') étant déterminée au moins le long de la direction de faisceau (33) du faisceau laser d'usinage (4) et la valeur de correction étant déterminée, et dans une étape d'ajustement (43) suivant l'étape de détermination, l'optique de focalisation (2) étant réglée de la valeur de correction.
